# EUROPEAN PATENT SPECIFICATION

(11) **EP 3 737 109 B1**
(45) Date of publication and mention of the grant of the patent: **20.03.2024**
(21) Application number: 19173251.0
(22) Date of filing: 08.05.2019
(51) Int. Cl.: H04N 21/6334, H04N 21/647, H04L 9/32, G06F 21/64, H04N 21/24, H04N 21/258, H04N 21/845

(54) **VERIFICATION CODE GENERATION METHOD, DATA VERIFICATION METHOD AND ELECTRONIC DEVICE**
VERFAHREN ZUR ERZEUGUNG VON VERIFIZIERUNGSKODES, DATENVERIFIZIERUNGSVERFAHREN UND ELEKTRONISCHE VORRICHTUNG
PROCÉDÉ DE GÉNÉRATION DE CODES DE VÉRIFICATION, PROCÉDÉ DE VÉRIFICATION DE DONNÉES ET DISPOSITIF ÉLECTRONIQUE

(43) Date of publication of application: 11.11.2020
(73) Proprietor: Getac Holdings Corporation, Taoyuan City 333412 (TW)
(72) Inventor: CHEN, Yu-Shian, 11568 Taipei City (TW); TSENG, Kuo-Yang, 11568 Taipei City (TW)
(74) Representative: Viering, Jentschura & Partner mbB Patent- und Rechtsanwälte

(56) References cited:
- EP-B1- 0 976 221
- US-A1- 2002 194 209
- US-A1- 2007 239 961
- US-A1- 2017 075 938
- US-A1- 2017 147 830
- US-B1- 7 581 094
- US-B1- 7 624 335

## Description

### BACKGROUND OF THE INVENTION

### FIELD OF THE INVENTION

The present invention relates to the field of video/audio security and, more particularly, to a verification code generation method, a data verification method and an electronic device.

### DESCRIPTION OF THE PRIOR ART

US 2017/0075938 A1 discloses systems and methods for storing and verifying data; wherein reference levels are generated according to time intervals, where the first reference level comprises a predetermined number of file time intervals, and where each of the time intervals of the remaining reference levels is comprised of a predetermined number of the time intervals of a previous reference level.
Further, hashes of data are created at the first reference level by performing a hashing function on the data in a time-sequenced manner. First reference level time interval hashes are generated by performing the hashing function on the hashes of the data at each of the time intervals of the first reference level. Hashes for remaining reference level time intervals are generated by performing file hashing func-tion on the hashes of each of the time intervals of the previous reference level.
Further systems and methods for storing and verifying data are disclosed by US 2007/0239961 A1.
With the popularity of video/audio recording devices in the recent years, video/audio security has become essential. In the field of video/audio security, verification codes are a critical technology. In general, a verification code is generated by a complex hash function, and a calculation result of such hash function is thus referred to as a hash value, or referred to as a message digest. Theoretically speaking, hash values generated from different data are different, and hence hash values can be used as verification data for determining whether data has been tampered during a transmission process. In a current approach, an entire footage not at all edited is used to generate a hash value, or hash processing is individually performed on multiple frames divided from a completely stored video file. However, in a situation where a video/audio recording device is currently generating a video/audio stream, the above prior art may fail to dynamically generate the verification codes of a part of the data, in a way that a subsequent verification method may fail to verify the integrity of the part of the data.

### SUMMARY OF THE INVENTION

In view of the above, it is an object of the present invention to provide a verification code generation method, a data verification method and an electronic device capable of dynamically generating verification codes of a part of data or capable of quickly verifying the integrity of a part of data. The present invention provides a verification code generation method according to independent claim 1, a data verification method according to independent claim 5, and an electronic device according to independent claim 7. The dependent claims show further examples of a suchlike verification code generation method, data verification method, and electronic device, respectively. To achieve the object, a verification code generation method performed in an electronic device is provided according to an embodiment of the present invention, wherein the electronic device is for performing encoding to generate a video/audio stream having multiple data segments. The verification code generation method includes the following steps. Each time one of the data segments is generated from the encoding, a first-level checksum associated with the data segment is generated, and the first-level checksum is recorded in an accompanying verification file. At an interval of every N data segments of the data segments, a second-level checksum is generated for W consecutive first-level checksums, and the second-level checksum is recorded in the accompanying verification file. Wherein, W is a positive integer greater than or equal to 2, N is a positive integer greater than 0 and smaller than or equal to W.

A data verification method performed in an electronic device is further provided according to an embodiment of the present invention, wherein the electronic device has the accompanying verification file of the foregoing embodiment stored therein. The data verification method includes the following steps. First, according to a starting time of a video/audio under verification, a first-level checksum corresponding to the video/audio under verification is identified from multiple first-level checksums in the accompanying verification file, wherein the first-level checksum includes a first hash value associated with a data segment of the data segments and associated with a timestamp associated with the data segment. Then, according to the first hash value of the first-level checksum corresponding to the video/audio under verification, it is verified whether the video/audio under verification is correct, wherein a second-level checksum covering the first-level checksum corresponding to the video/audio under verification includes a second hash value of multiple first hash values of covered multiple first-level checksums, and multiple timestamps of the covered first-level checksums.

An electronic device is further provided according to an embodiment of the present invention. The electronic device includes an encoding engine, a verification code generation circuit and at least one storage device. The encoding engine is for performing encoding to generate a video/audio stream including multiple data segments. The storage device stores a first application which is for instructing the electronic device to perform the verification code generation method of the foregoing embodiment. Preferably, the electronic device may further include a verification circuit, and the storage device stores a second application which is for instructing the electronic device to perform the data verification method of the foregoing embodiment.

To further understand the features and technical contents of the present invention, please refer to the detailed description and accompanying drawings associated with the present invention. However, the description and the accompanying drawings are for illustrating the present invention and are not to be construed as limitations to the claim scope of the present invention.

### BRIEF DESCRIPTION OF THE DRAWINGS

FIG. 1 is a function block diagram of an electronic device provided according to an embodiment of the present invention;
FIG. 2 is a flowchart of a verification code generation method according to an embodiment of the present invention;
FIG. 3A is a schematic diagram of checksums and digital signatures generated in the verification code generation method in FIG. 2 according to an embodiment;
FIG. 3B is a schematic diagram of checksums and digital signatures generated in the verification code generation method in FIG. 2 according to another embodiment;
FIG. 4 is a flowchart of a verification code generation method according to another embodiment of the present invention;
FIG. 5A is a schematic diagram of checksums and digital signatures generated in the verification code generation method in FIG. 4 according to an embodiment;
FIG. 5B is a schematic diagram of checksums and digital signatures generated in the verification code generation method in FIG. 4 according to another embodiment; and
FIG. 6 is a flowchart of a data verification method provided according to an embodiment of the present invention.

### DETAILED DESCRIPTION OF THE EMBODIMENTS

In the disclosure below, various embodiments of the present invention are given in detail with the accompanying drawings to describe the present invention. However, the concepts of the present invention can be embodied by means of numerous different forms and are not to be construed as being limited to the exemplary embodiments given in the disclosure. Furthermore, the same reference numerals in the drawings can represent similar elements.

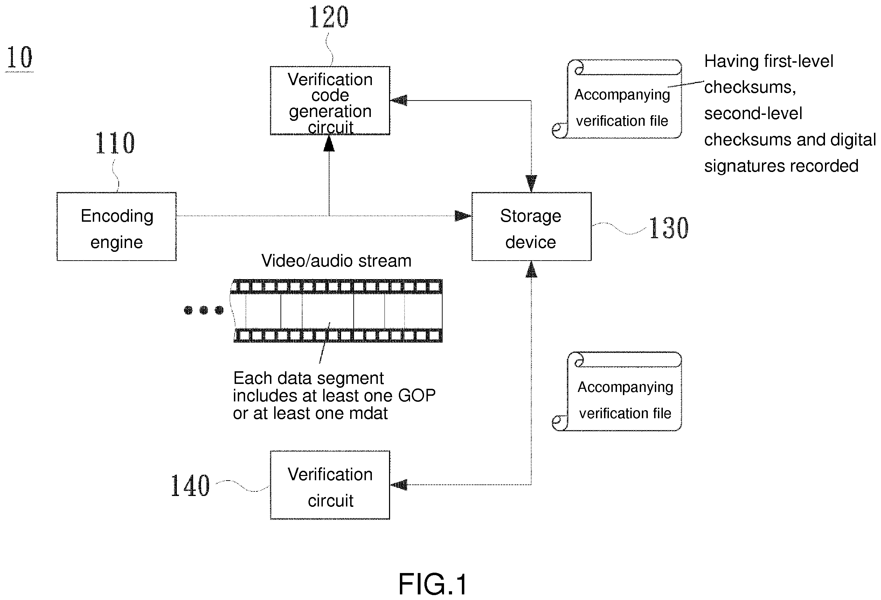

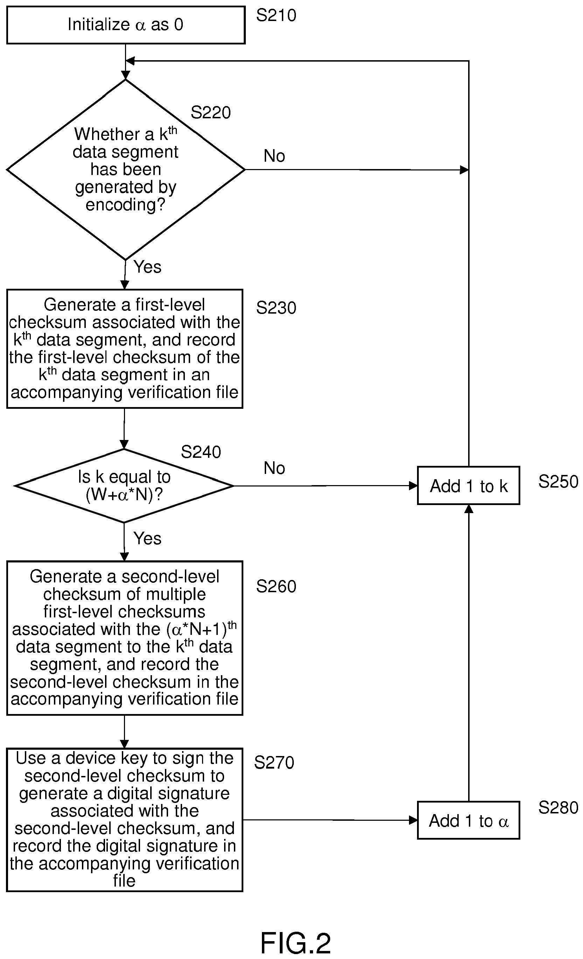

Refer to both FIG. 1 and FIG. 2. FIG. 1 shows a function block diagram of an electronic device provided according to an embodiment of the present invention. FIG. 2 shows a flowchart of a verification code generation method provided according to an embodiment of the present invention. It should be noted that, the verification code generation method in FIG. 2 can be performed in the electronic device 10 in FIG. 1; however, the present invention does not limit that the verification code generation method in FIG. 2 can be performed only in the electronic device 10 in FIG. 1. In FIG. 1, the electronic device 10 includes an encoding engine 110, a verification code generation circuit 120 and at least one storage device. For illustration purposes, in this embodiment, the storage device in a quantity of one, i.e., the storage device 130, is given as an example, and such exemplary quantity is not to be construed as a limitation to the present invention. Furthermore, the encoding engine 110, the verification code generation circuit 120 and the storage device 130 can be implemented by purely hardware circuits, or be implemented by hardware circuits matched with firmware or software. In brief, the present invention does not limit the specific implementation form of the electronic device 10, and a person skilled in the art could carry out associated designs according to actual requirements or applications. Furthermore, the

verification code generation circuit 120 is coupled between the encoding engine 110 and the storage device 130, and the encoding engine 110, the verification code generation circuit 120 and the storage device 130 can be integrated together or be separately configured; however, the present invention is not limited to the above.

The encoding engine 110 is for performing encoding to generate a video/audio stream having multiple data segments. In this embodiment, the video/audio stream is generated by encoding according to, for example, the MPEG-4 standard. Thus, each data segment of the video/audio stream can include at least one group of pictures (GOP) or at least one set of media data (mdat). In practice, the present invention does not limit that the data segments need to individually include the same quantity of GOPs or media data, and the quantity of GOP or media data included in each data segment can be dynamically determined according to the operation capability of the electronic device 10. For example, in this embodiment, the electronic device 10 can be, for example, a body cam, and thus each data segment can include 5 to 8 GOPs; however, the present invention is not limited to the above. The operation principle of generating a video/audio stream by encoding according to the MPEG-4 standard is generally known to a person skilled in the art, and thus details of the encoding engine 110 are not further described herein.

The storage device 130 is for storing the data segments of the video/audio stream. The verification code generation method in FIG. 2 can be achieved by an application (not shown) having a plurality of instructions. In this embodiment, the application is referred to as a first application which can also be stored in the storage device 130 and is for instructing the electronic device 10 to perform the verification code generation method in FIG. 2. That it to say, when the electronic device 10 is installed with the first application, the electronic device 10 can activate the verification code generation method in FIG. 2. It should be noted that, the present invention does not limit the specific implementation form of the electronic device 10 regarding the installation of the first application and the activation for performing the verification code generation method in FIG. 2, and a person skilled in the art could carry out associated designs according to actual requirements or applications.

More specifically, after the electronic device 10 activates the verification code generation method in FIG. 2, as shown in FIG. 2, the verification code generation circuit 120 first initializes a variable α as 0 in step S210, and determines whether the encoding engine 110 has generated a k^{th} data segment (of the video/audio stream) by encoding in step S220. If so, the process continues to step S230, otherwise the process returns to step S220 until the k^{th} data segment has been generated by encoding. In step S230, the verification code generation circuit 120 generates a first-level checksum associated with the k^{th} data segment, and records the first-level checksum of the k^{th} data segment in an accompanying verification file. It should be understood that, the above variable k is a positive integer starting from 1, and the first-level checksum of the k^{th} data segment includes a hash value associated with the k^{th} data segment, wherein the hash value is referred to as a first hash value in this embodiment. The operation principle for generating the hash value of the k^{th} data segment is generally known to a person skilled in the art, and thus associated details are not further described herein.

The present invention does not limit the specific implementation form of the accompanying verification file, and a person skilled in the art could carry out associated designs according to actual requirements and applications. In this embodiment, the accompanying verification file can be similarly stored in the storage device 130. Alternatively, in other embodiments, if the electronic device 10 further includes a second storage device, the second storage device can be in charge for storing the accompanying verification file, or alternatively speaking, for storing a verification code of this embodiment. In step S240, the verification code generation circuit 120 determines whether the variable k is equal to (W+α*N). In this embodiment, W represents W consecutive data segments (or the number of the first-level checksums) needed for generating one second-level checksum, N represents a data segment interval at which one second-level checksum is generated, where W is a positive integer greater than or equal to 2, and N is a positive integer greater than 0 and smaller than or equal to W, that is, 0 < N ≦W. If not, the process continues to step S250; and if so, the process continues to step S260. In step S250, the verification code generation circuit 120 adds 1 to k, and the process returns to step S220 after 1 is added to k.

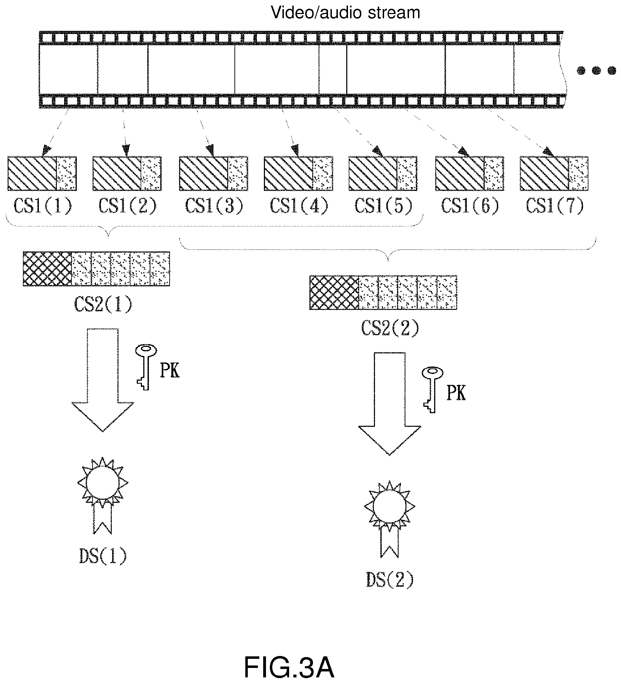

In step S260, the verification code generation circuit 120 generates a second-level checksum of multiple first-level checksums associated with the (α*N+1)^{th} data segment to the k^{th} data segment, and records the second-level checksum in the accompanying verification file. In step S270, the verification code generation circuit 120 uses a device key PK (not shown in FIG. 1) to sign the second-level checksum to generate a digital signature associated with the second-level checksum, and records the digital signature in the accompanying verification file. In step S280, the verification code generation circuit 120 adds 1 to α, and the process continues to step S250 after 1 is added to α. For illustration purposes below, it is assumed that W is 5 and N is 2 for example; however, the present invention is not limited to the above. Refer to FIG. 3A showing a schematic diagram of checksums and digital signatures generated in the verification code generation method in FIG. 2 according to an embodiment of the present invention.

As shown in FIG. 3A, after it is determined that the encoding engine 110 has generated the 1^{st} data segment by encoding, the verification code generation circuit 120 generates a first-level checksum CS1(1) associated with the 1^{st} data segment, and records the first-level checksum CS1(1) in the accompanying verification file (not shown in FIG. 3A). However, at this point in time, the variable k is not equal to (W+α*N), that is, 1 ≠ (5+0*2). Thus, the verification code generation circuit 120 adds 1 to k, that is, performing step S250 in FIG. 2 to render k to become 2; after k has become 2, the verification code generation circuit 120 determines whether the encoding engine 110 has generated the 2^{nd} data segment by encoding. If so, the verification code generation circuit 120 generates a first-level checksum CS1(2) associated with the 2^{nd} data segment, and records the first-level checksum CS1(2) in the accompanying verification file. The above steps are repeated until the verification code generation circuit 120 generates a first-level checksum CS1(5) associated with the 5^{th} data segment, and records the first-level checksum CS1(5) in the accompanying verification file. At this point in time, the variable k is equal to (W+α*N), that is, 5=(5+0*2). Thus, the verification code generation circuit 120 generates a second-level checksum CS2(1) associated with the (α*N+1)^{th} data segment to the k^{th} data segment, i.e., a second-level checksum CS2(1) of the first-level checksums CS1(1) to CS1(5) of the 1^{st} to the 5^{th} data segments, and records the second-level checksum CS2(1) in the accompanying verification file. Next, the verification code generation circuit 120 uses the device key PK to sign the second-level checksum CS2(1) to generate a digital signature DS(1) associated with the second-level checksum CS2(1), and records the digital signature DS(1) in the accompanying verification file.

It should be noted that, the second-level checksum CS2(1) can include a new hash value of the first hash values of the covered first-level checksums CS1(1) to CS1(5), wherein the new hash value is simply referred to as a second hash value. That is to say, in this embodiment, the verification code generation circuit 120 performs hash processing by using the first hash values of the first-level checksums CS1(1) to CS1(5) to generate the second hash value in the second-level checksum CS2(1). For illustration purposes below, the first hash value in each first-level checksum is represented by a diagonal line shaded block, and the second hash value of each second-level checksum is represented by a grid shaded block. As previously described, because hash values generated by hash processing for different data are different, a person skilled in the art could understand that, the diagonal line shaded blocks and the grid shaded blocks in the following embodiments in fact represent different hash values. Furthermore, in this embodiment, the device key PK can also be similarly stored in the storage device 130; alternatively, in other embodiments, if the electronic device 10 further includes a third storage device, the third storage device can be in charge of storing the device key PK, and the present invention does not limit the specific implementation form of the device key PK. The operation principle of using the device key PK to sign and generate a digital signature is generally known to a person skilled in the art, and thus associated details are not further described herein.

To further implement the data verification method provided according to the embodiment of the present invention, the first-level checksum CS1(k) of the k^{th} data segment can further include a timestamp associated with the k^{th} data segment, and the second-level checksum CS2(α+1) can further include the timestamps of the covered first-level checksums CS1(α*N+1) to CS1(k). For example, the first-level checksum CS1 (1) of the 1^{st} data segment further includes the timestamp associated with the 1^{st} data segment, and similarly, the first-level checksum CS1 (5) of the 5^{th} data segment further includes the timestamp associated with the 5^{th} data segment; moreover, the second-level checksum CS2(1) further includes the timestamps of the covered first-level checksums CS1 (1) to CS1 (5). However, the present invention is not limited to the above. The operation principle of the data verification method is to be described in detail by means of other embodiments below, and thus the associated details are not further described herein. It should be noted that, for illustration purposes below, the timestamp of each data segment is represented by a dot shaded block in the embodiments of the disclosure, and since the timestamps of the data segments are necessarily different, the dot shaded blocks in fact represent different timestamps. However, the present invention also does not limit the specific implementation form of the timestamps.

The verification code generation circuit 120 then sequentially adds 1 to α and adds 1 to k, i.e., performing step S280 and step S250 in FIG. 2 to render α and k to become 1 and 6, respectively. After α and k have respectively become 1 and 6, the verification code generation circuit 120 again determines whether the encoding engine 110 has generated the 6^{th} data segment by encoding. If so, the verification code generation circuit 120 generates a first-level checksum CS1(6) associated with the 6^{th} data segment, and records the first-level checksum CS1(6) in the accompanying verification file. The above steps are repeated similarly until the verification code generation circuit 120 generates a first-level checksum CS1(7) associated with the 7^{th} data segment, and records the first-level checksum CS1(7) in the accompanying verification file. At this point in time, as the variable k is equal to (W+α*N), i.e., 7=(5+1*2), the verification code generation circuit 120 generates a second-level checksum CS2(2) associated with the (α*N+1)^{th} data segment to the k^{th} data segment, i.e., a second-level checksum CS2(2) of the first-level checksums CS1(3) to CS1(7) of the 3^{rd} to 7^{th} data segments, and records the second-level checksum CS2(2) in the accompanying verification file.

Similarly, the verification code generation circuit 120 again uses the device key PK to sign the second-level checksum CS2(2) to generate a digital signature DS(2) associated with the second-level checksum CS2(2), and records the digital signature DS(2) in the accompanying verification file. The subsequent details are as those described previously, and shall be omitted herein. In other words, in the steps in FIG. 2, each time the encoding engine 110 finishes generates one of the data segments by encoding, the verification code generation method of this embodiment generates a first-level checksum associated with the data segment, and records the first-level checksum of the data segment in the accompanying verification file. At an interval of every N data segments of the data segments, the verification code generation method of this embodiment generates a second-level checksum for W consecutive first-level checksums, and records the second-level checksum in the accompanying verification file. In addition, the verification code generation method of this embodiment can further use the device key PK to sign the second-level checksum to generate a digital signature associated with the second-level checksum, and record the digital signature in the accompanying verification file.

On the basis of the teaching provided by the disclosure above, it would be easy for a person skilled in the art to understand that, different from the prior that divides an original video file completely stored in the storage device 130 into multiple frames and then individually performs hash processing on the frames, the verification code generation method of this embodiment is capable of dynamically generating a verification code for a part of data in a situation where the electronic device 10 is currently generating a video/audio stream. More particularly, when it is determined that once the encoding engine 110 has generated a part of data of sufficient units by encoding, the verification code generation method of this embodiment can real-time generate a first-level checksum for that part of data, and record the first-level checksum in the accompanying verification file, without affecting an original structure of the video/audio stream. In addition, without processing a video/audio stream that is already completely stored, the verification code generation method of this embodiment can again generate, at an interval of every N data segments, a second-level checksum for W consecutive first-level checksums and similarly record the second-level checksum in the accompanying verification file. Therefore, the verification code generation method of this embodiment allows a subsequent verification method to quickly verify the integrity of a part of data in the video/audio stream according to the accompanying verification file. More particularly in a situation where a part of data is damaged or lost, the data verification method provided according to an embodiment of the present invention is still capable of verifying the undamaged part of data correctly.

Moreover, different from the prior art that performs signing only in the last step, or alternatively speaking, performing signing in a final accompanying document, the verification code generation method of this embodiment signs every second-level checksum so as to individually generate corresponding digital signatures to reliably achieve a non-repudiation mechanism of a part of data. Furthermore, after it is determined that a video/audio stream is completely generated by encoding, or alternatively speaking, when each data segment in the video/audio stream is completely written to the storage device 130, the verification code generation circuit 120 can read all of the first-level checksums from the accompanying verification file, and set new constants W and N to again form and generate a new second-level checksum and a new digital signature, both of which can be similarly recorded in the accompanying verification file. Thus, by setting new constants W and N, for example, setting W and N in FIG. 3A to 3 and 1, the verification code generation method of this embodiment can allow a subsequent verification method to quickly verify the integrity of more small-part data. After the new second-level checksum and digital signature are recorded in the accompanying verification file, the verification code generation circuit 120 can delete the old second-level checksum and digital signature to save a capacity needed for recording in the accompanying verification file. In brief, the present invention does not limit the specific implementation form of the verification code generation circuit 120 regarding again forming the new second-level checksum and digital signature.

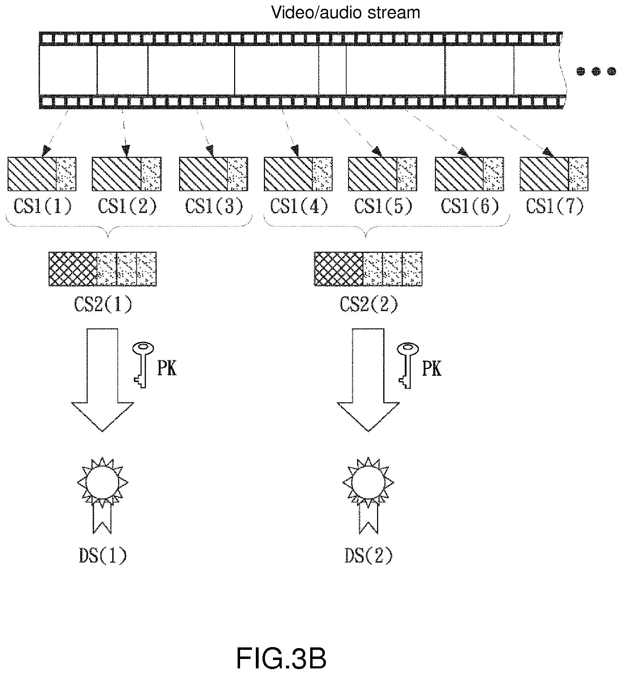

Furthermore, it is understandable that, when N is smaller than W, overlapping of (W-N) data segments is caused for a part of data corresponding to each second-level checksum; when N is equal to W, no overlapping is caused in the part of data corresponding to each second-level checksum. Thus, refer to FIG. 3B showing a schematic diagram of checksums and digital signatures generated in the verification code generation method in FIG. 2 according to another embodiment. In the embodiment in FIG. 3B, it is assumed that both W and N are 3 for example; however, the present invention is not limited to the above.

As shown in FIG. 3B, when it is determined that the encoding engine 110 has generated the 1^{st} data segment by encoding, the verification code generation circuit 120 generates a first-level checksum CS1(1) associated with the 1^{st} data segment, and records the first-level checksum CS1(1) in the accompanying verification file (not shown in FIG. 3B). However, as the variable k at this point in time is not equal to (W+α*N), i.e., 1 ≠(3+0*3), the verification code generation circuit 120 adds 1 to k, i.e., performing step S250 in FIG. 2 to render k to become 2. After k has become 2, the verification code generation circuit 120 again determines whether the encoding engine 110 has generated the 2^{nd} data segment by encoding. If so, the verification code generation circuit 120 generates a first-level checksum CS1(2) associated with the 2^{nd} data segment, and records the first-level checksum CS1(2) in the accompanying verification file. The above steps are repeatedly until the verification code generation circuit 120 generates a first-level checksum CS1(3) associated with the 3^{rd} data segment, and records the first-level checksum CS1(3) in the accompanying verification file. At this point in time, as the variable k is equal to (W+α*N), i.e., 3=(3+0*3), the verification code generation circuit 120 generates a second-level checksum CS2(1) associated with the (α*N+1)^{th} data segment to the k^{th} data segment, i.e., a second-level checksum CS2(1) of the first-level checksums CS1(1) to CS1(3) of the 1^{st} to 3^{rd} data segment, and records the second-level checksum CS2(1) in the accompanying verification file. Next, the verification code generation circuit 120 uses the device key PK to sign the second-level checksum CS2(1) to generate a digital signature DS(1) associated with the second-level checksum CS2(1), and records the digital signature DS(1) in the accompanying verification file.

The verification code generation circuit 120 then sequentially adds 1 to α and adds 1 to k, i.e., performing step S280 and step S250 in FIG. 2 to render α and k to respectively become 1 and 4. After α and k have respectively become 1 and 4, the verification code generation circuit 120 again determines whether the encoding engine 110 has generated the 4^{th} data segment by encoding. If so, the verification code generation circuit 120 generates a first-level checksum CS1(4) associated with the 4^{th} data segment, and records the first-level checksum CS1(4) in the accompanying verification file. The above steps are repeated until the verification code generation circuit 120 generates a first-level checksum CS1(6) associated with the 6^{th} data segment and records the first-level checksum CS1(6) in the accompanying verification file. At this point in time, as the variable k is equal to (W+α*N), i.e., 6=(3+1*3), the verification code generation circuit 120 generates a second-level checksum CS2(2) associated with the (α*N+1)^{th} data segment to the k^{th} data segment, i.e., a second-level checksum CS2(2) of the first-level checksums CS1(4) to CS1(6) of the 4^{th} to 6^{th} data segments, and records the second-level checksum CS2(2) in the accompanying verification file.

Similarly, the verification code generation circuit 120 again uses the device key PK to sign the second-level checksum CS2(2) to generate a digital signature DS(2) associated with the second-level checksum CS2(2), and records the digital signature DS(2) in the accompanying verification file. Subsequent details are as those given in the above description, and are thus omitted herein. In brief, because the part of data corresponding to each second-level checksum necessarily includes W consecutive parts of data, the verification code generation method of this embodiment allows a subsequent verification method to determine whether orders of the parts of data have been changed, or to determine whether any part of data is lost.

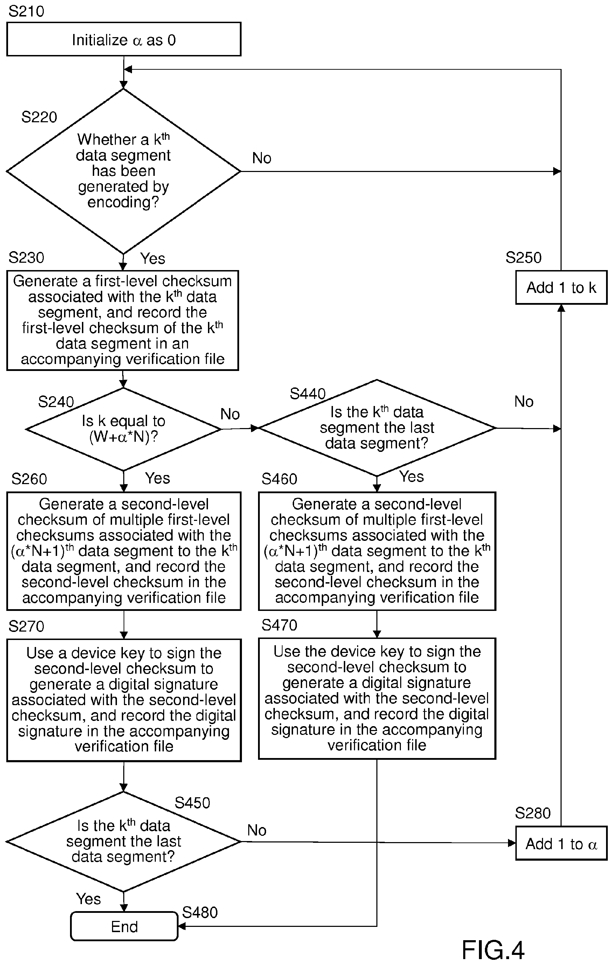

On the other hand, considering that if the determination result of step S240 is "negative" when the encoding engine 110 has generated the last data segment of the video/audio stream by encoding, the verification code generation method of the present invention is still required to again generate a second-level checksum for the last several consecutive first-level checksums. Refer to FIG. 4 showing a flowchart of a verification code generation method provided according to another embodiment of the present invention. It should be noted that, the verification code generation method in FIG. 4 can be similarly performed in the electronic device 10 in FIG. 1; however, the present invention does not limit that the verification code generation method in FIG. 4 can be performed only in the electronic device 10 in FIG. 1. Furthermore, some steps in FIG. 4 identical to those in FIG. 2 are represented by the same denotation numerals, and thus associated details are not further described. Compared to step S240 in FIG. 2, after it is determined that the variable k is not equal to (W+α*N), the verification code generation method in FIG. 4 can further include step S440 and steps S460 to S480.

In step S440, the verification code generation circuit 120 again determines whether the k^{th} data segment is the last data segment (of the video/audio stream). If not, the process continues to step S250 to add 1 to the variable k, and returns to step S220 after 1 is added to k; if so, the process continues to steps S460 to S480. In step S460, the verification code generation circuit 120 generates a second-level checksum of multiple first-level checksums associated with the (α*N+1)^{th} data segment to the k^{th} data segment, and records the second-level checksum in the accompanying verification file. In step S470, the verification code generation circuit 120 uses the device key PK (not shown in FIG. 4) to sign the second-level checksum to generate a digital signature associated with the second-level checksum, and records the digital signature in the accompanying verification file. It is understandable that, operation principles of steps S460 and S470 are equivalent to those of steps S260 and S270, except that the k^{th} data segment at this point in time is the last data segment. Thus, in the following step S480, the electronic device 10 ends the verification code generation method of this embodiment. Only when the verification code generation method of this embodiment is again activated, the electronic device 10 again performs the verification code generation method, starting from step S210 in FIG. 4. It should be noted that, the present invention does not limit the specific implementation form of the verification code generation circuit 120 regarding the determination for whether the k^{th} data segment is the last data segment, and a person skilled in the art could carry out associated designs according to actual requirements or applications.

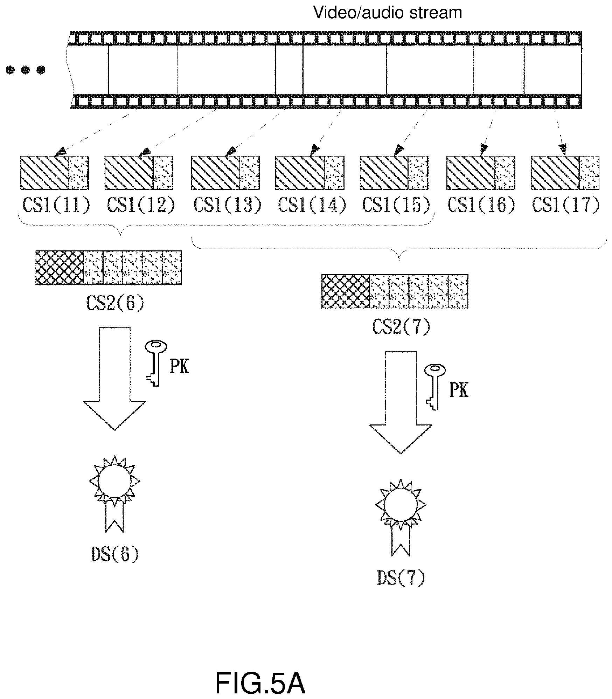

After it is determined that the variable k is equal to (W+α*N), in addition to continuing to steps S260 and S270, the verification code generation method in FIG. 4 can further include step S450. In step S450, the verification code generation circuit 120 also determines whether the k^{th} data segment is the last data segment (of the video/audio stream). If not, the process continues to step S280 and step S250 to add 1 to α and k, respectively, and returns to step S220 after 1 is added to α and k, respectively. If so, the process continues to step S480, i.e., ending the verification code generation method of this embodiment. For illustration purposes below, it is similarly assumed that W is 5 and N is 2 for example in this embodiment. Refer to FIG. 5A showing a schematic diagram of checksums and digital signatures generated in the verification code generation method in FIG. 4 according to an embodiment. Furthermore, in the embodiment in FIG. 5A, because details before k is 13 are as described above, and thus are omitted herein.

As shown in FIG. 5A, when it is determined that the encoding engine 110 has generated the 14^{th} data segment by encoding, the verification code generation circuit 120 generates a first-level checksum CS1(14) associated with the 14^{th} data segment, and records the first-level checksum CS1(14) in the accompanying verification file (not shown in FIG. 5A). However, as the variable k at this point in time is not equal to (W+α*N), i.e., 14≠(5+5*2), and the 14^{th} data segment should not be the last data segment of the video/audio stream, the verification code generation circuit 120 adds 1 to k, i.e., performing step S250 in FIG. 4 to render k to become 15. After k has become 15, the verification code generation circuit 120 again determines whether the encoding engine 110 has generated the 15^{th} data segment by encoding. If so, the verification code generation circuit 120 generates a first-level checksum CS1(15) associated with the 15^{th} data segment, and records the first-level checksum CS1(15) in the accompanying verification file. As the variable k at this point in time is equal to (W+α*N), i.e., 15=(5+5*2), the verification code generation circuit 120 performs step S260 to generate a second-level checksum CS2(6) associated with the (α*N+1)^{th} data segment to the k^{th} data segment, i.e., a second-level checksum CS2(6) of the first-level checksums CS1(11) to CS1(15) of the 11^{th} to 15^{th} data segments, and records the second-level checksum CS2(6) in the accompanying verification file.

Next, the verification code generation circuit 120 uses the device key PK to sign the second-level checksum CS2(6) to generate a digital signature DS(6) associated with the second-level checksum CS2(6), and records the digital signature DS(6) in the accompanying verification file. However, because the 15^{th} data segment at this point in time is still not the last data segment of the video/audio stream, the verification code generation circuit 120 again sequentially adds 1 to α and adds 1 to k, i.e., performing step S280 and step S250 in FIG. 4 to render α and k to become 6 and 16, respectively. After α and k have respectively become 6 and 16, the verification code generation circuit 120 again determines whether the encoding engine 110 has generated the 16^{th} data segment by encoding. If so, the verification code generation circuit 120 generates a first-level checksum CS1(16) associated with the 16^{th} data segment, and records the first-level checksum CS1(16) in the accompanying verification file. The above steps are repeated until the verification code generation circuit 120 generates a first-level checksum CS1(17) associated with the 17^{th} data segment and records the first-level checksum CS1(17) in the accompanying verification file. At this point in time, as the variable k is equal to (W+α*N), i.e., 17=(5+6*2), the verification code generation circuit 120 performs step S260 to generate a second-level checksum CS2(7) associated with the (α*N+1)^{th} data segment to the k^{th} data segment, i.e., a second-level checksum CS2(7) of the first-level checksums CS1(13) to CS1(17) of the 13^{th} to 17^{th} data segments, and records the second-level checksum CS2(7) in the accompanying verification file.

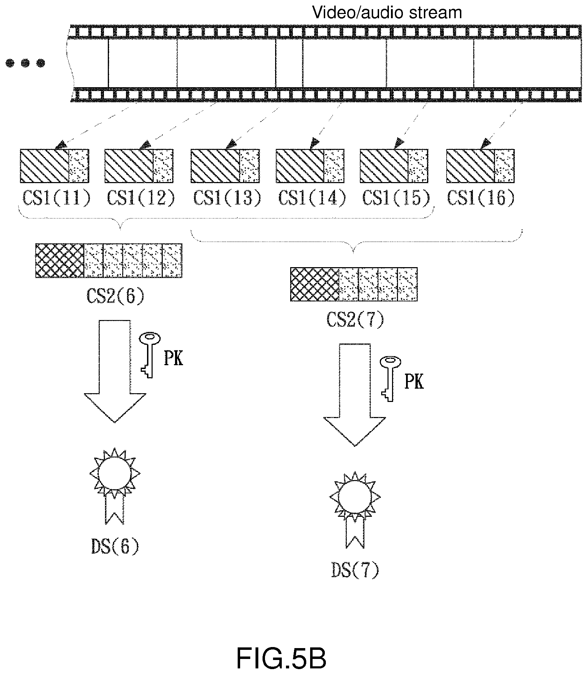

Similarly, the verification code generation circuit 120 uses the device key PK to sign the second-level checksum CS2(7) to generate a digital signature DS(7) associated with the second-level checksum CS2(7), and records the digital signature DS(7) in the accompanying verification file. It should be noted that, because the 17^{th} data segment at this point in time is the last data segment in the video/audio stream (step S450), the verification code generation circuit 120 continues to step S480 to end the verification code generation method of this embodiment. Furthermore, refer to FIG. 5B showing a schematic diagram of checksums and digital signatures generated in the verification code generation method in FIG. 4 according to another embodiment.

Compared to FIG. 5A in which the 17^{th} data segment is the last data segment, the 16^{th} data segment is used as the last data segment in FIG. 5B. Thus, even if the variable k at this point in time is not equal to (W+α*N), i.e., 16(5+5*2), because the determination result of step S440 is "affirmative", the verification code generation circuit 120 performs step S460 to generate a second-level checksum CS2(7) associated with the (α*N+1)^{th} data segment to the k^{th} data segment, i.e., a second-level checksum CS2(7) of the first-level checksums CS1(13) to CS1(16) of the 13^{th} to 16^{th} data segments, and records the second-level checksum CS2(7) in the accompanying verification file. The above steps are repeated until the digital signature DS(7) of the second-level checksum CS2(7) is recorded in the accompanying verification file (step S470), and the verification code generation circuit 120 then continues to step S480 to end the verification code generation method of this embodiment.

It should be noted that, if the frame rate of the video/audio stream is, for example, 30 FPS, and each data segment of the video/audio stream includes only one 0.5-second GOP, a one-minute video/audio stream can then include 120 data segments, or alternatively speaking, 120 GOPs (i.e., 120 GOP/min). Thus, for the one-minute video/audio stream, the verification code generation circuit 120 can generate 120 first-level checksums, and assuming that W is 8 and N is 6, the verification code generation circuit 120 can further generate 20 second-level checksums and 20 digital signatures. Then, in regard to SHA-2 in a hash function standard, the length of one hash value is defined as 256 bits, which are equivalent to 32 bytes (i.e., 256 bits=32 bytes), and the lengths of one timestamp and one digital signature are respectively 32 bytes and 256 bytes. Thus, the 120 first-level checksums within this one minute include a total of 7,680 bytes, i.e., 120*(32+32)=7,680; the 20 second-level checksums and 20 digital signatures within this one minute respectively include totals of 5,760 bytes and 5,120 bytes, i.e., 20*(32+8*32)=5,760 and 20*256=5,120. That is to say, compared to the one-minute video/audio stream having a data size of approximately 200 MB, the accompanying verification file requires only approximately 18K bytes. Therefore, the verification code generation method of this embodiment does not bring noticeably loading to the overall system.

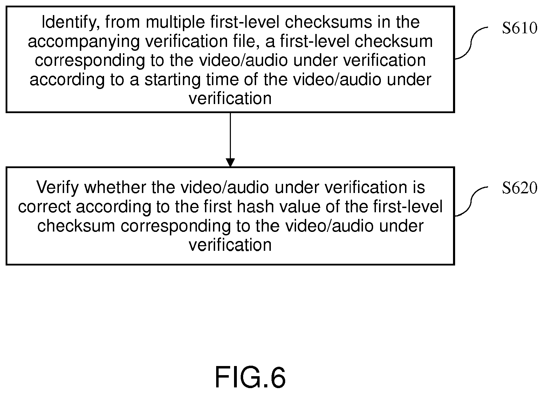

To further illustrate a verification process collaborating with the verification code generation method of this embodiment, the present invention further provides an embodiment for a subsequent verification method. Refer to FIG. 6 showing a flowchart of a data verification method provided according to an embodiment of the present invention. It should be noted that, the data verification method in FIG. 6 can similarly be performed in the electronic device 10 in FIG. 1; however, the present invention does not limit that the data verification method in FIG. 6 can be performed only in the electronic device 10 in FIG. 1. Alternatively speaking, the verification code generation method of the foregoing embodiment and the data verification method of this embodiment can be performed by the same electronic device, e.g., the electronic device 10 in FIG. 1, or be respectively performed by different electronic devices. In brief, the electronic device performing the data verification method of this embodiment needs to store the accompanying verification file of the foregoing embodiment.

Similarly, the data verification method in FIG. 6 can be achieved by an application (not shown) having a plurality of instructions, and the application is referred to as a second application in this embodiment. Moreover, for illustration purposes, this embodiment is also performed by the electronic device 10 in FIG. 1. Thus, the electronic device 10 in FIG. 1 can further include a verification circuit 140 coupled to the storage device 130, and the second application can similarly be stored in the storage device 130 and is used for instructing the electronic device 10 to perform the data verification method in FIG. 6. That is to say, when the electronic device 10 is installed with the second application, the electronic device 10 can activate the data verification method in FIG. 6. The present invention does not limit the specific implementation form of the verification circuit 140, nor does it limit the specific implementation forms of the electronic device 10 regarding the installation of the second application and the activation of the data verification method in FIG. 6. A person skilled in the art can carry out associated designs according to actual requirements and applications.

More specifically, after the electronic device 10 activates the data verification method in FIG. 6, as shown in FIG. 6, in step S610, according to a starting time of a video/audio under verification, the verification circuit 140 identifies, from multiple first-level checksums in the accompanying verification file, a first-level checksum corresponding to the video/audio under verification. However, for illustration purposes, it is assumed in this embodiment that the video/audio under verification is one data segment in FIG. 3A; however, the present invention is not limited to the above example. Furthermore, the first-level checksum corresponding to the video/audio under verification can include the first hash value of one data segment in FIG. 3A as well as the timestamp associated with the data segment. Thus, in this embodiment, the verification circuit 140 can determine by comparison whether the starting time of the video/audio under verification matches the timestamp of any one of the data segments in FIG. 3A to identify the first-level checksum corresponding to the video/audio under verification; however, the present invention is not limited to the above.

In step S620, the verification circuit 140 can verify whether the video/audio under verification is correct according to the first hash value of the first-level checksum corresponding to the video/audio under verification. For example, assuming that the first-level checksum corresponding to the video/audio under verification refers to the first-level checksum CS1 (3) in FIG. 3A, the verification circuit 140 can use the same hash function to calculate the hash value of the video/audio under verification, and determine by comparison whether the hash value of the video/audio under verification is the same as the first hash value in the first-level checksum CS1 (3). If the two are the same, it means that the video/audio under verification is correct; if the two are different, it means that the video/audio under verification has been tampered. The operation principle of using a hash value for data verification is generally known to a person skilled in the art, and thus the associated details are not further described herein.

As shown in FIG. 3A, the second-level checksum CS2(1) covering the first-level checksum CS1 (3) corresponding to the video/audio under verification includes a second hash value of multiple first hash values of the covered first-level checksums CS1(1) to CS1 (5), and multiple timestamps of the covered first-level checksums CS1(1) to CS1 (5). Thus, when the video/audio under verification refers to the 3^{rd} data segment, given that the verification circuit 140 obtains the 1^{st}, 2^{nd}, 4^{th} and 5^{th} data segments, the verification circuit 140 can also verify according to the first hash values of the first-level checksums CS1 (1) to CS1 (5) and the second hash value of the second-level checksum CS2(1), whether the above parts of data have been tampered. Similarly, in this embodiment, the verification circuit 140 can further identify from the accompanying verification file the second-level checksum CS2(1) covering the first-level checksum CS1 (3) corresponding to the video/audio under verification, and use the same device key PK to verify whether the second-level checksum CS2(1) and the digital signature DS(1) associated with the second-level checksum CS2(1) are correct. In brief, with thorough understanding of the verification code generation method of the foregoing embodiment, a person skilled in the art could carry out associated designs of the subsequent verification method according to actual requirements or applications.

In conclusion, different from the prior art that divides an original video file completely stored into multiple frames and then individually performs hash processing on the frames, the verification code generation method of the embodiment of the present invention is capable of dynamically generating a verification code for a part of data in a situation where the electronic device is currently generating a video/audio stream. More particularly, when it is determined that once the encoding engine has generated a part of data of sufficient units by encoding, the verification code generation method of the embodiment of the present invention can real-time generate a first-level checksum associated with that part of data, and record the first-level checksum in the accompanying verification file. In addition, without processing a video/audio stream that is already completely stored, the verification code generation method of the embodiment of the present invention can again generate, at an interval of every N data segments, a second-level checksum for W consecutive first-level checksums and similarly record the second-level checksum in the accompanying verification file. Therefore, the verification code generation method of the embodiment of the present invention allows a subsequent verification method, e.g., the data verification method provided by the embodiment of the present invention, to quickly verify the integrity of a part of data according to the accompanying verification file. More particularly in a situation where a part of data is damaged or lost, the data verification method provided according to the embodiment of the present invention is still capable of verifying the undamaged part of data correctly.

While the present invention has been described by way of the above embodiments, it is to be understood that the claim scope of the present invention is not limited thereto.

## Claims

1. A verification code generation method, performed in an electronic device (10), the electronic device (10) for performing encoding to generate a video/audio stream having a plurality of data segments,
wherein each data segment of the video/audio stream includes at least one group of pictures (GOP) or at least one set of media data (mdat); wherein the data segments are not limited to individually include the same quantity of group of pictures (GOP) or media data (mdat), and the quantity of group of pictures (GOP) or media data (mdat) included in each data segment is dynamically determined according to an operation capability of the electronic device (10); and
wherein the verification code generation method comprising:
each time a data segment of the data segments is completely generated by encoding, generating a first-level checksum (CS1) associated with the data segment, and recording the first-level checksum (CS1) in an accompanying verification file; and
at an interval of every N data segments of the data segments, generating a second-level checksum (CS2) for W consecutive first-level checksums (CS1), and recording the second-level checksum (CS2) in the accompanying verification file, where W is a positive integer greater than or equal to 2, and N is a positive integer greater than 0 and smaller than or equal to W.

2. The verification code generation method according to claim 1, wherein the first-level checksum (CS1) of the data segment comprises a first hash value associated with the data segment, and the second-level checksum (CS2) comprises a second hash value of the first hash values of the covered first-level checksums (CS1).

3. The verification code generation method according to claim 2, wherein the first-level checksum (CS1) of the data segment further comprises a timestamp associated with the data segment, and the second-level checksum (CS2) further comprises the timestamps of the covered first-level checksums (CS1).

4. The verification code generation method according to claim 3, wherein the step of generating the second-level checksum (CS2) and recording the second-level checksum (CS2) in the accompanying verification file further comprises:
using a device key (PK) to sign the second-level checksum (CS2) to generate a digital signature associated with the second-level checksum (CS2), and recording the digital signature in the accompanying verification file.

5. A data verification method, performed in an electronic device (10),
wherein an encoding engine (110) of the electronic device (10) is for performing encoding to generate a video/audio stream having multiple data segments; wherein each data segment of the video/audio stream includes at least one group of pictures (GOP) or at least one set of media data (mdat), wherein the data segments are not limited to individually include the same quantity of group of pictures (GOP) or media data (mdat), and the quantity of group of pictures (GOP) or media data (mdat) included in each data segment is dynamically determined according to an operation capability of the electronic device (10),
wherein
the electronic device (10) having an accompanying verification file stored therein, the accompanying verification file recording a plurality of first-level checksums (CS1) associated with a plurality of data segments of a video/audio stream, the accompanying verification file recording, at an interval of every N data segments of the data segments, a second-level checksum (CS2) associated with W consecutive first-level checksums (CS1), W being a positive integer greater than or equal to 2, N being a positive integer greater than 0 and smaller than or equal to W, the data verification method comprising:
identifying, from the first-level checksums (CS1) in the accompanying verification file, a first-level checksum (CS1) corresponding to a video/audio under verification according to a starting time of the video/audio under verification, the first-level checksum (CS1) comprising a first hash value associated with one data segment of the data segments and a timestamp associated with the data segment; and
verifying, according to the first hash value of the first-level checksum (CS1) corresponding to the video/audio under verification, whether the video/audio under verification is correct, wherein the second-level checksum (CS2) covering the first-level checksum (CS1) corresponding to the video/audio under verification comprises a second hash value of the first hash values of the covered first-level checksums (CS1) and the timestamps of the covered first-level checksums (CS1).

6. The data verification method according to claim 5, wherein, with respect to the second-level checksum (CS2) covering the first-level checksum (CS1) corresponding to the video/audio under verification, the accompanying verification file further records a digital signature associated with the second-level checksum (CS2), the data verification method further comprising:
identifying, from the accompanying verification file, the second-level checksum (CS2) covering the first-level checksum (CS1) corresponding to the video/audio under verification; and
using a device key (PK) to verify whether the second-level checksum (CS2) and the digital signature associated with the second-level checksum (CS2) are correct.

7. An electronic device (10), comprising:
an encoding engine (110), for performing encoding to generate a video/audio stream having a plurality of data segments;
wherein each data segment of the video/audio stream includes at least one group of pictures (GOP) or at least one set of media data (mdat), wherein the data segments are not limited to individually include the same quantity of group of pictures (GOP) or media data (mdat), and the quantity of group of pictures (GOP) or media data (mdat) included in each data segment is dynamically determined according to the operation capability of the electronic device (10);
a verification code generation circuit (120); and
at least one storage device (130), storing a first application, the first application for instructing the electronic device (10) to perform a verification code generation method, wherein the verification code generation method comprises:
each time a data segment of the data segments is completely generated by encoding performed by the encoding engine (110), the verification code generation circuit (120) generating a first-level checksum (CS1) associated with the data segment, and recording the first-level checksum (CS1) in an accompanying verification file; and
at an interval of every N data segments of the data segments, the verification code generation circuit (120) generating a second-level checksum (CS2) for W consecutive first-level checksums (CS1), and recording the second-level checksum (CS2) in the accompanying verification file, where W is a positive integer greater than or equal to 2, and N is a positive integer greater than 0 and smaller than or equal to W.

8. The electronic device (10) according to claim 7, wherein the first-level checksum (CS1) of the data segment comprises a first hash value associated with the data segment, and the second-level checksum (CS2) comprises a second hash value of the first hash values of the covered first-level checksums (CS1).

9. The electronic device (10) according to claim 8, wherein the first-level checksum (CS1) of the data segment further comprises a timestamp associated with the data segment, and the second-level checksum (CS2) further comprises the timestamps of the covered first-level checksums (CS1).

10. The electronic device (10) according to claim 9, wherein the step of generating the second-level checksum (CS2) and recording the second-level checksum (CS2) in the accompanying verification file further comprises:
using, by the verification code generation circuit (120), a device key (PK) to sign the second-level checksum (CS2) to generate a digital signature associated with the second-level checksum (CS2), and recording the digital signature in the accompanying verification file.

11. The electronic device (10) according to claim 10, further comprising a verification circuit (140), the at least one storage device (130) further storing a second application, the second application being for instructing the electronic device (10) to perform a data verification method, wherein the data verification method comprises:
the verification circuit (140) identifying, from the first-level checksums (CS1) in the accompanying verification file, a first-level checksum (CS1) corresponding to a video/audio under verification according to a starting time of the video/audio under verification; and
verifying, according to the first hash value of the first-level checksum (CS1) corresponding to the video/audio under verification whether the video/audio under verification is correct.

12. The electronic device (10) according to claim 11, wherein the data verification method further comprises:
identifying, from the accompanying verification file, the second-level checksum (CS2) covering the first-level checksum (CS1) corresponding to the video/audio under verification; and
using a device key (PK) to verify whether the second-level checksum (CS2) and the digital signature associated with the second-level checksum (CS2) are correct.

## Patentansprüche

1. Verifikationscode-Generierungsverfahren, welches in einer elektronischen Vorrichtung (10) durchgeführt wird, wobei die elektronische Vorrichtung (10) zum Durchführen des Encodierens dient, um einen Video/Audio-Stream zu generieren, welcher mehrere Datensegmente hat,
wobei jedes Datensegment des Video/Audio-Streams mindestens eine Bildergruppe (GOP) oder mindestens einen Mediendatensatz (mdat) aufweist, wobei die Datensegmente nicht darauf beschränkt sind, individuell die gleiche Anzahl von Bildergruppen (GOP) oder Mediendaten (mdat) aufzuweisen, und wobei die Anzahl von Bildergruppen (GOP) oder Mediendaten (mdat), welche in jedem Datensegment aufgewiesen sind, gemäß einer Betriebsfähigkeit der elektronischen Vorrichtung (10) dynamisch bestimmt wird, und
wobei das Verifikationscode-Generierungsverfahren aufweist:
jedes Mal, wenn ein Datensegment von den Datensegmenten mittels Encodierens vollständig generiert ist, Generieren einer Erstes-Level-Prüfsumme (CS1), welche dem Datensegment zugeordnet ist, und Aufzeichnen der Erstes-Level-Prüfsumme (CS1) in einer begleitenden Verifikationsdatei, und
bei einem Intervall von jeweils N Datensegmenten von den Datensegmenten, Generieren einer Zweites-Level-Prüfsumme (CS2) für W aufeinanderfolgende Erstes-Level-Prüfsummen (CS1), und Aufzeichnen der Zweites-Level-Prüfsumme (CS2) in der begleitenden Verifikationsdatei, wobei W eine positive ganze Zahl größer als oder gleich 2 ist, und wobei N eine positive ganze Zahl größer als 0 und kleiner als oder gleich W ist.

2. Verifikationscode-Generierungsverfahren gemäß Anspruch 1, wobei die Erstes-Level-Prüfsumme (CS1) des Datensegments einen ersten Hashwert aufweist, welcher dem Datensegment zugeordnet ist, und wobei die Zweites-Level-Prüfsumme (CS2) einen zweiten Hashwert von den ersten Hashwerten der abgedeckten Erstes-Level-Prüfsumme (CS1) aufweist.

3. Verifikationscode-Generierungsverfahren gemäß Anspruch2, wobei die Erstes-Level-Prüfsumme (CS1) des Datensegments ferner einen Zeitstempel aufweist, welcher dem Datensegment zugeordnet ist, und wobei die Zweites-Level-Prüfsumme (CS2) ferner die Zeitstempel der abgedeckten Erstes-Level-Prüfsummen (CS1) aufweist.

4. Verifikationscode-Generierungsverfahren gemäß Anspruch 3, wobei der Schritt des Generierens der Zweites-Level-Prüfsumme (CS2) und des Aufzeichnens der Zweites-Level-Prüfsumme (CS2) in der begleitenden Verifikationsdatei ferner aufweist:
Verwenden eines Vorrichtungsschlüssels (PK), um die Zweites-Level-Prüfsumme (CS2) zu signieren, um eine digitale Signatur zu generieren, welche der Zweites-Level-Prüfsumme (CS2) zugeordnet ist, und Aufzeichnen der digitalen Signatur in der begleitenden Verifikationsdatei.

5. Datenverifikationsverfahren, welches in einer elektronischen Vorrichtung (10) durchgeführt wird, wobei eine Encodiermaschine (110) der elektronischen Vorrichtung (10) zum Durchführen des Encodierens dient, um einen Video/Audio-Stream zu generieren, welcher mehrere Datensegmente hat, wobei jedes Datensegment des Video/Audio-Streams mindestens eine Bildergruppe (GOP) oder mindestens einen Mediendatensatz (mdat) aufweist, wobei die Datensegmente nicht darauf beschränkt sind, individuell die gleiche Anzahl von Bildergruppen (GOP) oder Mediendaten (mdat) aufzuweisen, und wobei die Anzahl von Bildergruppen (GOP) oder Mediendaten (mdat), welche in jedem Datensegment aufgewiesen sind, gemäß einer Betriebsfähigkeit der elektronischen Vorrichtung (10) dynamisch bestimmt wird,
wobei:
die elektronische Vorrichtung (10) eine begleitende Verifikationsdatei hat, welche darin gespeichert ist, wobei die begleitende Verifikationsdatei mehrere Erstes-Level-Prüfsummen (CS1) aufzeichnet, welche mehreren Datensegmenten eines Video/Audio-Streams zugeordnet sind, wobei die begleitende Verifikationsdatei in einem Intervall von jeweils N Datensegmenten von den Datensegmenten eine Zweites-Level-Prüfsumme (CS2) aufzeichnet, welche W aufeinanderfolgenden Erstes-Level-Prüfsummen (CS1) zugeordnet ist, wobei W eine positive ganze Zahl größer als oder gleich 2 ist, wobei N eine positive ganze Zahl größer als 0 und kleiner als oder gleich W ist, wobei das Datenverifikationsverfahren aufweist:
Identifizieren, aus den Erstes-Level-Prüfsummen (CS1) in der begleitenden Verifikationsdatei, einer Erstes-Level-Prüfsumme (CS1), welche mit einem Video/Audio unter Verifikation korrespondiert, gemäß einer Startzeit des Videos/Audios unter Verifikation, wobei die Erstes-Level-Prüfsumme (CS1) einen ersten Hashwert, welcher einem Datensegment von den Datensegmenten zugeordnet ist, und einen Zeitstempel aufweist, welcher dem Datensegment zugeordnet ist, und
Verifizieren, gemäß dem ersten Hashwert der Erstes-Level-Prüfsumme (CS1), welche mit dem Video/Audio unter Verifikation korrespondiert, ob das Video/Audio unter Verifikation korrekt ist, wobei die Zweites-Level-Prüfsumme (CS2), welche die Erstes-Level-Prüfsumme (CS1) abdeckt, welche mit dem Video/Audio unter Verifikation korrespondiert, einen zweiten Hashwert der ersten Hashwerte der Erstes-Level-Prüfsummen (CS1) und den Zeitstempel der abgedeckten Erstes-Level-Prüfsumme (CS1) aufweist.

6. Datenverifikationsverfahren gemäß Anspruch 5, wobei, mit Bezug auf die Zweites-Level-Prüfsumme (CS2), welche die Erstes-Level-Prüfsumme (CS1) abdeckt, welche mit dem Video/Audio unter Verifikation korrespondiert, die begleitende Verifikationsdatei, ferner eine digitale Signatur aufzeichnet, welche der Zweites-Level-Prüfsumme (CS2) zugeordnet ist, wobei das Datenverifikationsverfahren ferner aufweist:
Identifizieren, aus der begleitenden Verifikationsdatei, der Zweites-Level-Prüfsumme (CS2), welche die Erstes-Level-Prüfsumme (CS1) abdeckt, welche mit dem Video/Audio unter Verifikation korrespondiert, und
Verwenden eines Vorrichtungsschlüssels (PK), um zu verifizieren, ob die Zweites-Level-Prüfsumme (CS2) und die digitale Signatur, welche der Zweites-Level-Prüfsumme (CS2) zugeordnet ist, korrekt sind.

7. Elektronische Vorrichtung (10), aufweisend:
eine Encodiermaschine (110) zum Durchführen von Encodieren, um einen Video/Audio-Stream zu generieren, welcher eine Vielzahl von Datensegmenten hat,
wobei jedes Datensegment des Video/Audio-Streams mindestens eine Bildergruppe (GOP) oder mindestens einen Mediendatensatz (mdat) aufweist, wobei die Datensegmente nicht darauf beschränkt sind, individuell die gleiche Anzahl von Bildergruppen (GOP) oder Mediendaten (mdat) aufzuweisen, und wobei die Anzahl von Bildergruppen (GOP) oder Mediendaten (mdat), welche in jedem Datensegment aufgewiesen sind, gemäß der Betriebsfähigkeit der elektronischen Vorrichtung (10) dynamisch bestimmt wird,
eine Verifikationscode-Generierung-Schaltung (120), und
mindestens eine Speichervorrichtung (130), welche eine erste Anwendung speichert, wobei die erste Anwendung zum Anweisen der elektronischen Vorrichtung (10) dient, um ein Verifikationscode-Generierungsverfahren durchzuführen, wobei das Verifikationscode-Generierungsverfahren aufweist:
jedes Mal, wenn ein Datensegment von den Datensegmenten vollständig generiert ist mittels Encodierens, welches mittels der Encodiermaschine (110) durchgeführt wird, generiert die Verifikationscode-Generierung-Schaltung (120) eine Erstes-Level-Prüfsumme (CS1), welche dem Datensegment zugeordnet ist, und zeichnet die Erstes-Level-Prüfsumme (CS1) in einer begleitenden Verifikationsdatei auf, und
in einem Intervall von jeweils N Datensegmenten von den Datensegmenten, generiert die Verifikationscode-Generierung-Schaltung (120) eine Zweites-Level-Prüfsumme (CS2) für W aufeinanderfolgende Erstes-Level-Prüfsummen (CS1), und zeichnet die Zweites-Level-Prüfsumme (CS2) in der begleitenden Verifikationsdatei auf, wobei W eine positive ganze Zahl größer als oder gleich 2 ist, und wobei N eine positive ganze Zahl größer als 0 und kleiner als oder gleich W ist.

8. Elektronische Vorrichtung (10) gemäß Anspruch 7, wobei die Erstes-Level-Prüfsumme (CS1) des Datensegments einen ersten Hashwert aufweist, welcher dem Datensegment zugeordnet ist, und wobei die Zweites-Level-Prüfsumme (CS2) einen zweiten Hashwert der ersten Hashwerte der abgedeckten Erstes-Level-Prüfsumme (CS1) aufweist.

9. Elektronische Vorrichtung (10) gemäß Anspruch 8, wobei die Erstes-Level-Prüfsumme (CS1) des Datensegments ferner einen Zeitstempel aufweist, welcher dem Datensegment zugeordnet ist, und wobei die Zweites-Level-Prüfsumme (CS2) ferner die Zeitstempel der abgedeckten Erstes-Level-Prüfsumme (CS1) aufweist.

10. Elektronische Vorrichtung (10) gemäß Anspruch 9, wobei der Schritt des Generierens der Zweites-Level-Prüfsumme (CS2) und des Aufzeichnens der Zweites-Level-Prüfsumme (CS2) in der begleitenden Verifikationsdatei ferner aufweist:
Verwenden, mittels der Verifikationscode-Generierung-Schaltung (120), eines Vorrichtungsschlüssels (PK), um die Zweites-Level-Prüfsumme (CS2) zu signieren, um eine digitale Signatur zu generieren, welche der Zweites-Level-Prüfsumme (CS2) zugeordnet ist, und Aufzeichnen der digitalen Signatur in der begleitenden Verifikationsdatei.

11. Elektronische Vorrichtung (10) gemäß Anspruch 10, welche ferner eine Verifikation-Schaltung (140) aufweist, wobei die mindestens eine Speichervorrichtung (130) ferner eine zweite Anwendung speichert, wobei die zweite Anwendung zum Anweisen der elektronischen Vorrichtung (10) dient, um ein Datenverifikationsverfahren durchzuführen, wobei das Datenverifikationsverfahren aufweist:
die Verifikation-Schaltung (140), welche, aus den Erstes-Level-Prüfsummen (CS1) in der begleitenden Verifikationsdatei, eine Erstes-Level-Prüfsumme (CS1) identifiziert, welche mit einem Video/Audio unter Verifikation korrespondiert, gemäß einer Startzeit des Videos/Audios unter Verifikation, und
Verifizieren, gemäß dem ersten Hashwert der Erstes-Level-Prüfsumme (CS1), welche mit dem Video/Audio unter Verifikation korrespondiert, ob das Video/Audio unter Verifikation korrekt ist.

12. Elektronische Vorrichtung (10) gemäß Anspruch 11, wobei das Datenverifikationsverfahren ferner aufweist:
Identifizieren, aus der begleitenden Verifikationsdatei, der Zweites-Level-Prüfsumme (CS2), welche die Erstes-Level-Prüfsumme (CS1) abdeckt, welche mit dem Video/Audio unter Verifikation korrespondiert, und
Verwenden eines Vorrichtungsschlüssels (PK), um zu verifizieren, ob die Zweites-Level-Prüfsumme (CS2) und die digitale Signatur, welche der Zweites-Level-Prüfsumme (CS2) zugeordnet ist, korrekt sind.

## Revendications

1. Procédé de génération de code de vérification, exécuté dans un dispositif électronique (10), le dispositif électronique (10) étant destiné à effectuer un codage pour générer un flux vidéo/audio comportant une pluralité de segments de données,
dans lequel chaque segment de données du flux vidéo/audio comprend au moins un groupe d'images (GOP) ou au moins un ensemble de données média (mdat) ; dans lequel les segments de données ne sont pas limités à inclure individuellement la même quantité de groupes d'images (GOP) ou de données média (mdat), et la quantité de groupes d'images (GOP) ou de données média (mdat) inclus dans chaque segment de données est déterminée dynamiquement en fonction d'une capacité de fonctionnement du dispositif électronique (10) ; et
dans lequel le procédé de génération de code de vérification comprend :
à chaque fois qu'un segment de données des segments de données est entièrement généré par codage, générer une somme de contrôle de premier niveau (CS1) associée au segment de données, et enregistrer la somme de contrôle de premier niveau (CS1) dans un fichier de vérification accompagnant ; et
à un intervalle de tous les N segments de données des segments de données, générer une somme de contrôle de deuxième niveau (CS2) pour W sommes de contrôle de premier niveau consécutives (CS1), et enregistrer la somme de contrôle de deuxième niveau (CS2) dans le fichier de vérification accompagnant, où W est un nombre entier positif supérieur ou égal à 2, et N est un nombre entier positif supérieur à 0 et inférieur ou égal à W.

2. Procédé de génération de code de vérification selon la revendication 1, dans lequel la somme de contrôle de premier niveau (CS1) du segment de données comprend une première valeur de hachage associée au segment de données, et la somme de contrôle de deuxième niveau (CS2) comprend une deuxième valeur de hachage des premières valeurs de hachage des sommes de contrôle de premier niveau couvertes (CS1).

3. Procédé de génération de code de vérification selon la revendication 2, dans lequel la somme de contrôle de premier niveau (CS1) du segment de données comprend en outre un horodatage associé au segment de données, et la somme de contrôle de deuxième niveau (CS2) comprend en outre les horodatages des sommes de contrôle de premier niveau couvertes (CS1).

4. Procédé de génération de code de vérification selon la revendication 3, dans lequel l'étape de génération de la somme de contrôle de deuxième niveau (CS2) et d'enregistrement de la somme de contrôle de deuxième niveau (CS2) dans le fichier de vérification accompagnant comprend en outre :
l'utilisation d'une clé de dispositif (PK) pour signer la somme de contrôle de deuxième niveau (CS2) afin de générer une signature numérique associée à la somme de contrôle de deuxième niveau (CS2), et l'enregistrement de la signature numérique dans le fichier de vérification accompagnant.

5. Procédé de vérification de données, exécuté dans un dispositif électronique (10),
dans lequel un moteur de codage (110) du dispositif électronique (10) est destiné à effectuer un codage pour générer un flux vidéo/audio comportant plusieurs segments de données ; dans lequel chaque segment de données du flux vidéo/audio comprend au moins un groupe d'images (GOP) ou au moins un ensemble de données média (mdat), dans lequel les les segments de données ne sont pas limités à inclure individuellement la même quantité de groupes d'images (GOP) ou de données média (mdat), et la quantité de groupes d'images (GOP) ou de données média (mdat) inclus dans chaque segment de données est déterminée dynamiquement en fonction d'une capacité de fonctionnement du dispositif électronique (10),
dans lequel
le dispositif électronique (10) ayant un fichier de vérification accompagnant stocké dans celui-ci, le fichier de vérification accompagnant enregistrant une pluralité de sommes de contrôle de premier niveau (CS1) associées à une pluralité de segments de données d'un flux vidéo/audio, le fichier de vérification accompagnant enregistrant, à un intervalle de tous les N segments de données des segments de données, une somme de contrôle de deuxième niveau (CS2) associée à W sommes de contrôle de premier niveau consécutives (CS1), W étant un nombre entier positif supérieur ou égal à 2, N étant un nombre entier positif supérieur à 0 et inférieur ou égal à W, le procédé de vérification des données comprenant :
l'identification, à partir des sommes de contrôle de premier niveau (CS1) dans le fichier de vérification accompagnant, d'une somme de contrôle de premier niveau (CS1) correspondant à une vidéo/audio en cours de vérification en fonction d'une heure de début de la vidéo/audio en cours de vérification, la somme de contrôle de premier niveau (CS1) comprenant une première valeur de hachage associée à un segment de données parmi les segments de données et un horodatage associé au segment de données ; et
la vérification, en fonction de la première valeur de hachage de la somme de contrôle de premier niveau (CS1) correspondant à la vidéo/audio en cours de vérification, si la vidéo/audio en cours de vérification est correcte, où la somme de contrôle de deuxième niveau (CS2) couvrant la somme de contrôle de premier niveau (CS1) correspondant à la vidéo/audio en cours de vérification comprend une deuxième valeur de hachage des premières valeurs de hachage des sommes de contrôle de premier niveau couvertes (CS1) et les horodatages des sommes de contrôle de premier niveau couvertes (CS1).

6. Procédé de vérification de données selon la revendication 5, dans lequel, en ce qui concerne la somme de contrôle de deuxième niveau (CS2) couvrant la somme de contrôle de premier niveau (CS1) correspondant à la vidéo/audio en cours de vérification, le fichier de vérification accompagnant enregistre en outre une signature numérique associée à la somme de contrôle de deuxième niveau (CS2), le procédé de vérification de données comprenant en outre :
l'identification, à partir du fichier de vérification accompagnant, de la somme de contrôle de deuxième niveau (CS2) couvrant la somme de contrôle de premier niveau (CS1) correspondant à la vidéo/audio en cours de vérification ; et
l'utilisation d'une clé de dispositif (PK) pour vérifier si la somme de contrôle de deuxième niveau (CS2) et la signature numérique associée à la somme de contrôle de deuxième niveau (CS2) sont correctes.

7. Dispositif électronique (10), comprenant :
un moteur de codage (110), pour effectuer un codage afin de générer un flux vidéo/audio comportant une pluralité de segments de données ;
dans lequel chaque segment de données du flux vidéo/audio comprend au moins un groupe d'images (GOP) ou au moins un ensemble de données média (mdat), dans lequel les segments de données ne sont pas limités à inclure individuellement la même quantité de groupes d'images (GOP) ou de données média (mdat), et la quantité de groupes d'images (GOP) ou de données média (mdat) inclus dans chaque segment de données est déterminée dynamiquement en fonction de la capacité de fonctionnement du dispositif électronique (10) ;
un circuit de génération de code de vérification (120) ; et
au moins un dispositif de stockage (130), stockant une première application, la première application étant destinée à ordonner au dispositif électronique (10) d'exécuter un procédé de génération de code de vérification, dans lequel le procédé de génération de code de vérification comprend :
chaque fois qu'un segment de données des segments de données est entièrement généré par le codage effectué par le moteur de codage (110), le circuit de génération de code de vérification (120) génère une somme de contrôle de premier niveau (CS1) associée au segment de données, et enregistre la somme de contrôle de premier niveau (CS1) dans un fichier de vérification accompagnant ; et
à un intervalle de tous les N segments de données des segments de données, le circuit de génération de code de vérification (120) génère une somme de contrôle de deuxième niveau (CS2) pour W sommes de contrôle de premier niveau consécutives (CS1), et enregistre la somme de contrôle de deuxième niveau (CS2) dans le fichier de vérification accompagnant, où W est un nombre entier positif supérieur ou égal à 2, et N est un nombre entier positif supérieur à 0 et inférieur ou égal à W.

8. Dispositif électronique (10) selon la revendication 7, dans lequel la somme de contrôle de premier niveau (CS1) du segment de données comprend une première valeur de hachage associée au segment de données, et la somme de contrôle de deuxième niveau (CS2) comprend une deuxième valeur de hachage des premières valeurs de hachage des sommes de contrôle de premier niveau couvertes (CS1).

9. Dispositif électronique (10) selon la revendication 8, dans lequel la somme de contrôle de premier niveau (CS1) du segment de données comprend en outre un horodatage associé au segment de données, et la somme de contrôle de deuxième niveau (CS2) comprend en outre les horodatages des sommes de contrôle de premier niveau couvertes (CS1).

10. Dispositif électronique (10) selon la revendication 9, dans lequel l'étape de génération de la somme de contrôle de deuxième niveau (CS2) et d'enregistrement de la somme de contrôle de deuxième niveau (CS2) dans le fichier de vérification accompagnant comprend en outre :
l'utilisation, par le circuit de génération de code de vérification (120), d'une clé de dispositif (PK) pour signer la somme de contrôle de deuxième niveau (CS2) afin de générer une signature numérique associée à la somme de contrôle de deuxième niveau (CS2), et l'enregistrement de la signature numérique dans le fichier de vérification accompagnant.

11. Dispositif électronique (10) selon la revendication 10, comprenant en outre un circuit de vérification (140), ledit au moins un dispositif de stockage (130) stockant en outre une deuxième application, la deuxième application étant destinée à ordonner au dispositif électronique (10) d'exécuter un procédé de vérification de données, dans lequel le procédé de vérification de données comprend :
l'identification, par le circuit de vérification (140), à partir des sommes de contrôle de premier niveau (CS1) dans le fichier de vérification accompagnant, d'une somme de contrôle de premier niveau (CS1) correspondant à une vidéo/audio en cours de vérification en fonction d'une heure de début de la vidéo/audio en cours de vérification ; et
la vérification, en fonction de la première valeur de hachage de la somme de contrôle de premier niveau (CS1) correspondant à la vidéo/audio en cours de vérification, si la vidéo/audio en cours de vérification est correcte.

12. Dispositif électronique (10) selon la revendication 11, dans lequel le procédé de vérification de données comprend en outre :
l'identification, à partir du fichier de vérification accompagnant, de la somme de contrôle de deuxième niveau (CS2) couvrant la somme de contrôle de premier niveau (CS1) correspondant à la vidéo/audio en cours de vérification ; et
l'utilisation d'une clé de dispositif (PK) pour vérifier si la somme de contrôle de deuxième niveau (CS2) et la signature numérique associée à la somme de contrôle de deuxième niveau (CS2) sont correctes.
